# EUROPEAN PATENT APPLICATION

(11) **EP 4 560 430 A1**
(43) Date of publication of application: **28.05.2025**
(21) Application number: 23875145.7
(22) Date of filing: 26.09.2023
(51) Int. Cl.: G06F 1/16, H04M 1/02, G09F 9/30

(54) **ROLLABLE ELECTRONIC DEVICE**

(30) Priority: 04.10.2022 KR 20220126129; 01.11.2022 KR 20220143681
(71) Applicant: Samsung Electronics Co., Ltd., Suwon-si, Gyeonggi-do 16677 (KR)
(72) Inventor: PARK, Hyekyoung, Suwon-si, Gyeonggi-do 16677 (KR); LEE, Suman, Suwon-si, Gyeonggi-do 16677 (KR); CHUNG, Myungkyoon, Suwon-si, Gyeonggi-do 16677 (KR)
(74) Representative: HGF
(86) International application number: PCT/KR2023/014798
(87) International publication number: WO 2024/076079

(57) **Abstract**

According to an embodiment of the present disclosure, an electronic device may comprise: a first housing; a second housing configured to slide with respect to the first housing; a display including a first display area disposed on the first housing and a second display area extending from the first display area, the display being configured such that at least a portion of the second display area slides on the basis of the slide movement of the second housing; a first battery disposed on the first housing; a second battery disposed on the second housing and configured to slide on the basis of the slide movement of the second housing; a plate disposed on the second housing and providing a seating space of the second battery on the basis of the slide movement of the second housing; and a support member of which one end is connected to the first housing, of which the other end is connected to the plate, and which is formed to move on the basis of the slide movement of the second housing.

## Description

### [Technical Field]

An embodiment of the disclosure relates to a rollable electronic device.

### [Background Art]

Due to the remarkable development of information communication technology and semiconductor technology, the distribution and use of various electronic devices are rapidly increasing. In particular, recent electronic devices are being developed to be portable and capable of communication.

In addition, the electronic devices may output information stored therein as sound or an image. As the degree of integration of electronic devices increases and ultra-high-speed and high-capacity wireless communication become more widespread, a single electronic device, such as a mobile communication terminal, may be now equipped with various functions. For example, in addition to communication functions, entertainment functions such as gaming, multimedia functions such as music/video playback, communication and security functions for mobile banking or the like, as well as schedule management and electronic wallet functions, are being integrated into a single electronic device. These electronic devices are being miniaturized to be conveniently carried by users. With the recent emphasis on miniaturization, slimness, and portability of portable electronic devices such as smartphones, research is continuously being conducted to aesthetically enhance the design of the appearance of electronic devices.

### [Detailed Description of the Invention]

### [Technical Solution]

According to an embodiment of the disclosure, an electronic device may include a first housing, a second housing configured to slide relative to the first housing, a display including a first display area disposed on the first housing and a second display area extending from the first display area, the display being configured such that at least a portion of the second display area is slid based on sliding of the second housing, a first battery disposed in the first housing, a second battery disposed in the second housing and configured to slide based on the sliding of the second housing, a plate disposed in the second housing and configured to provide a seating space for the second battery based on the sliding of the second housing, and a support member having one end connected to the first housing and the other end connected to the plate, the support member being configured to move based on the sliding of the second housing.

According to an embodiment of the disclosure, An electronic device may include a first housing, a second housing configured to slide relative to the first housing, a display including a first display area disposed on the first housing and a second display area extending from the first display area, the display being configured such that at least a portion of the second display area is slid based on sliding of the second housing, a first component disposed in the first housing; a second component disposed in the second housing and configured to slide based on the sliding of the second housing, a plate disposed in the second housing and configured to provide a seating space for the second component based on the sliding of the second housing, and a support member having one end connected to the first housing and the other end connected to the plate, the support member being configured to move based on the sliding of the second housing.

### [Brief Description of Drawings]

FIG. 1 is a block diagram of an electronic device according to an embodiment of the disclosure in a network environment.
FIG. 2 is a view illustrating an electronic device according to an embodiment of the disclosure in a closed state.
FIG. 3 is a view illustrating the electronic device according to an embodiment of the disclosure in an opened state.
FIG. 4 is an exploded perspective view of an electronic device according to an embodiment of the disclosure.
FIG. 5 is a perspective view illustrating intemal components of an electronic device according to an embodiment of the disclosure in the closed state.
FIG. 6 is a cross-sectional view illustrating intemal components of the electronic device according to an embodiment of the disclosure in the closed state.
FIG. 7 is a perspective view illustrating intemal components of the electronic device according to an embodiment of the disclosure in the opened state.
FIG. 8 is a cross-sectional view illustrating intemal components of the electronic device according to an embodiment of the disclosure in the opened state.
FIG. 9 is a side view illustrating printed circuit boards according to an embodiment of the disclosure in the opened state.
FIG. 10 is a side view illustrating the printed circuit boards according to an embodiment of the disclosure in the closed state.
FIG. 11 is a front view illustrating support members according to an embodiment of the disclosure in the closed state.
FIG. 12 is a front view illustrating support members according to an embodiment of the disclosure in the opened state.
FIG. 13 is a front view illustrating internal components of an electronic device according to an embodiment of the disclosure in the closed state.
FIG. 14 is a front view illustrating internal components of the electronic device according to an embodiment of the disclosure in the opened state.

### [Mode for Carrying out the Invention]

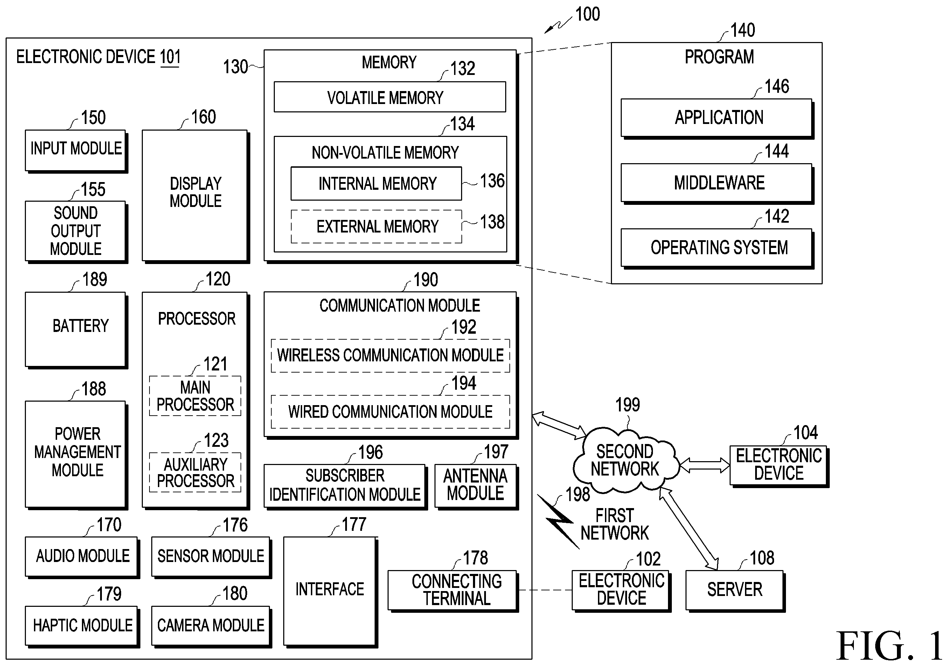

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an intemet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to an embodiment may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that an embodiment of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with an embodiment of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment as set forth herein may be implemented as software (e.g., the program) including one or more instructions that are stored in a storage medium (e.g., intemal memory or external memory) that is readable by a machine (e.g., the electronic device). For example, a processor (e.g., the processor) of the machine (e.g., the electronic device) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

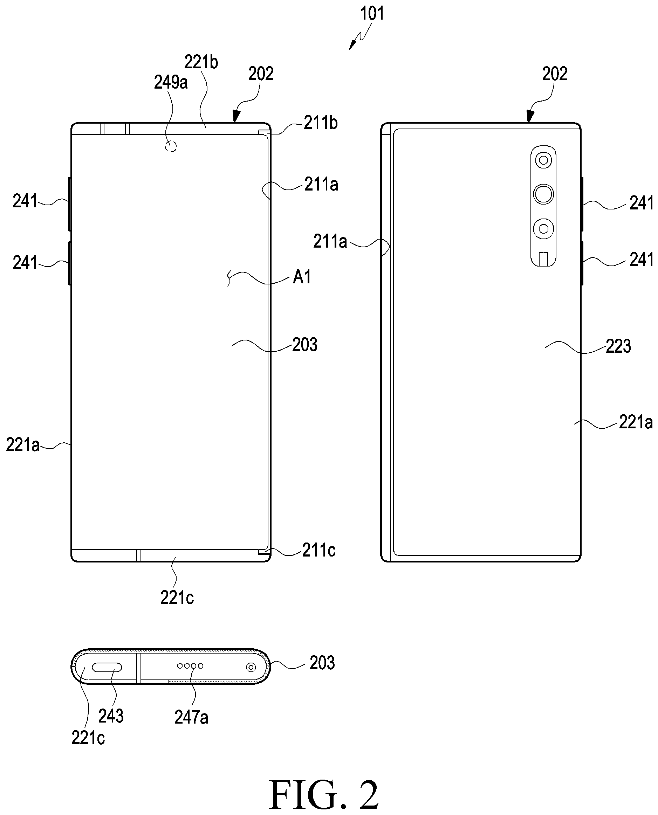

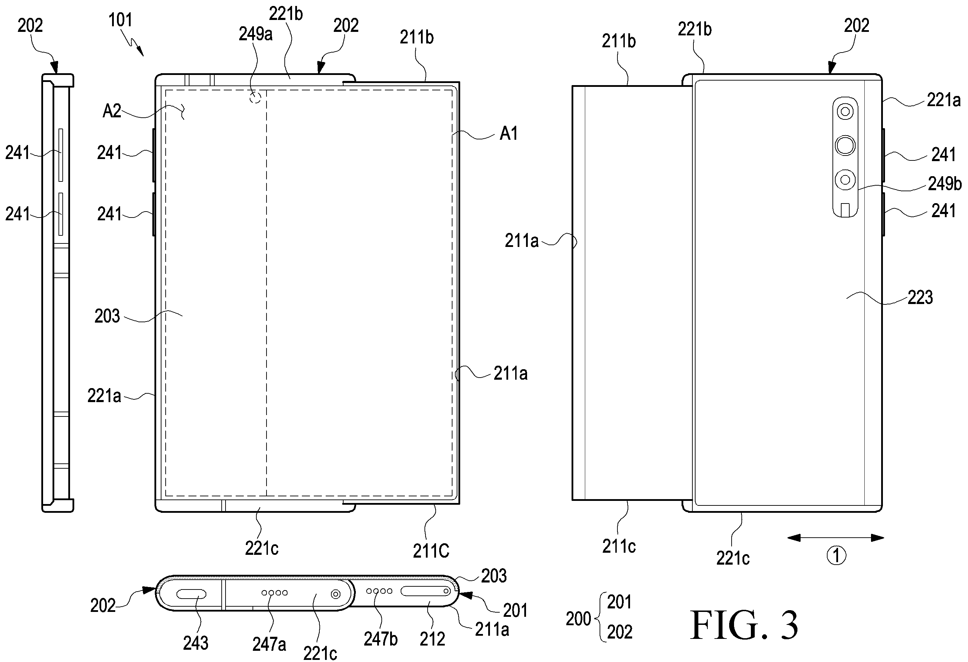

FIG. 2 is a view illustrating an electronic device according to an embodiment of the disclosure in a closed state. FIG. 3 is a view illustrating the electronic device according to an embodiment of the disclosure in an opened state. For example, FIG. 2 is a view illustrating a state in which a second display area A2 is accommodated within the housing 200. FIG. 3 is a view illustrating a state in which at least a portion of the second display area A2 is visually exposed outside the housing 200.

The state illustrated in FIG. 2 may be referred to as the state in which the first housing 201 is closed relative to the second housing 202, and the state illustrated in FIG. 3 may be referred to as the state in which the first housing 201 is opened relative to the second housing 202. According to an embodiment, the "closed state" or the "opened state" may be defined as the state in which the electronic device is closed or the state in which the electronic device is opened.

Referring to FIGS. 2 and 3, the electronic device 101 may include a housing 200. The housing 200 may include a second housing 202 and a first housing 201 movable relative to the second housing 202. In some embodiments, the electronic device 101 may be interpreted as having a structure in which the second housing 202 is arranged to be slidable relative to the first housing 201. According to an embodiment, the first housing 201 may be disposed to be able to reciprocate by a predetermined distance in the illustrated direction (e.g., the direction indicated by arrow ①) relative to the second housing 202. The configuration of the electronic device 101 of FIGS. 2 and 3 may be wholly or partially the same as that of the electronic device 101 of FIG. 1.

According to an embodiment, the first housing 201 may be referred to as, for example, a first structure, a slide unit, or a slide housing, and may be arranged to be reciprocate relatively the second housing 202. According to an embodiment, the second housing 202 may be referred to as, for example, a second structure, a main part, or a main housing. The second housing 202 may accommodate at least a portion of the first housing 201 and guide the sliding of the first housing 201. According to an embodiment, the second housing 202 may accommodate various electrical and electronic components such as a main circuit board and a battery. According to an embodiment, at least a portion of the display 203 (e.g., the first display area A1) may be visually exposed outside the housing 200. According to an embodiment, as the first housing 201 moves (e.g., slides) relative to the second housing 202, the display 203 (e.g., the second display area A2) may be accommodated inside the second housing 202 (e.g., a slide-in operation) or visually exposed outside the second housing 202 (e.g., a slide-out operation). According to an embodiment, a motor, a speaker, a SIM socket, and/or a sub-circuit board electrically connected to the main circuit board may be arranged within the first housing 201. The main circuit board on which electrical components such as an application processor (AP) and a communication processor (CP) are mounted may be arranged within the second housing 202.

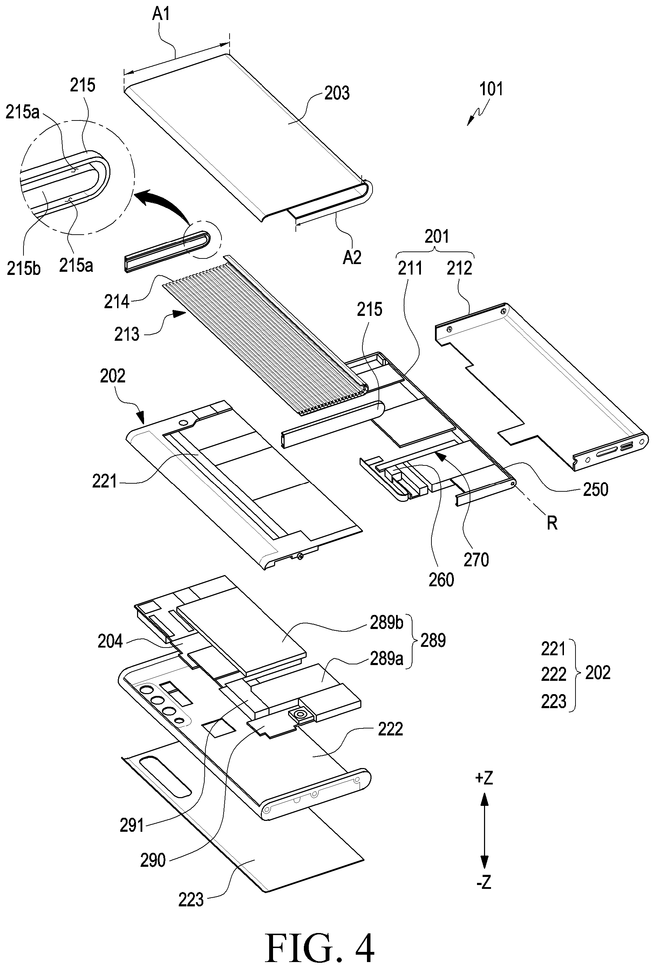

According to an embodiment, the first housing 201 may include first side walls 211a, 211b, and 211c for surrounding at least a portion of the display 203 and/or a display support member (e.g., the display support member 213 in FIG. 4). According to an embodiment, the first side walls 211a, 211b, and 211c may extend from a first plate (e.g., the first plate 211 in FIG. 4). The first side walls 211a, 211b, and 211c may include a (1-2)^{th} side wall 211b, a (1-3)^{th} side wall 211c opposite to the (1-2)^{th} side wall 211b, and a (1-1)^{th} side wall 211a extending from the (1-2)^{th} side wall 211b to the (1-3)^{th} side wall 211c. The (1-1)^{th} side wall 211a may be substantially perpendicular to the (1-2)^{th} side wall 211b and/or the (1-3)^{th} side wall 211c. According to an embodiment, in a closed state of the electronic device 101 (e.g., FIG. 2), the (1-2)^{th} side wall 211b may face the (2-2)^{th} side wall 221b of the second housing 202, and the (1-3)^{th} side wall 211c may face the (2-3)^{th} side wall 221c of the second housing 202. According to an embodiment, the (1-1)^{th} side wall 211a, the (1-2)^{th} side wall 211b, and/or the (1-3)^{th} side wall 211c may be integrated with the first plate (e.g., the first plate 211 in FIG. 4) or the slide cover 212. According to an embodiment, the (1-1)^{th} side wall 211a, the (1-2)^{th} side wall 211b, and/or the (1-3)^{th} side wall 211c may be configured as separate housings and may be then combined or assembled.

According to an embodiment, the second housing 202 may include second side walls 221a, 221b, and 221c for surrounding at least a portion of the first housing 201. According to an embodiment, the second side walls 221a, 221b, and 221c may extend from the second plate (e.g., the second plate 221 in FIG. 4) and/or the cover member (e.g., the cover member 222 in FIG. 4). According to an embodiment, the second side walls 221a, 221b, and 221c may include a (2-2)^{th} side wall 221b, a (2-3)^{th} side wall 221c opposite to the (2-2)^{th} side wall 221b, and a (2-1)^{th} side wall 221a extending from the (2-2)^{th} side wall 221b to the (2-3)^{th} side wall 221c. According to an embodiment, the (2-1)^{th} side wall 221a may be substantially perpendicular to the (2-2)^{th} side wall 221b and/or the (2-3)^{th} side wall 221c. According to an embodiment, the (2-2)^{th} side wall 221b may face the (1-2)^{th} side wall 211b, and the (2-3)^{th} side wall 221c may face the (1-3)^{th} side wall 211c. For example, in the closed state of the electronic device 101 (e.g., FIG. 2), the (2-2)^{th} side wall 221b may cover at least a portion of the (1-2)^{th} side wall 211b, and the (2-3)^{th} side wall 221c may cover at least a portion of the (1-3)^{th} side wall 211c.

According to an embodiment, the second housing 202 may be configured in a shape with one side (e.g., the front surface) open to accommodate (or surround) at least a portion of the first housing 201. For example, the first housing 201 may be connected to the second housing 202 in a state of being at least partially surrounded by the (2-1)^{th} side wall 221a, the (2-2)^{th} side wall 221b, and the (2-3)^{th} side wall 221c, and may slide in the direction indicated by arrow ① under the guidance of the second housing 202. According to an embodiment, the cover member (e.g., the cover member 222 in FIG. 4), the (2-1)^{th} side wall 221a, the (2-2)^{th} side wall 221b, and/or the (2-3)^{th} side wall 221c may be integrated. According to an embodiment, the second cover member 222, the (2-1)^{th} side wall 221a, the (2-2)^{th} side wall 221b, and/or the (2-3)^{th} side wall 221c may be configured as separate housings and then combined or assembled.

According to an embodiment, the second housing 202 may include a rear surface plate 223. According to various embodiments, the rear surface plate 223 may define at least a portion of the exterior of the electronic device 101. For example, the rear surface plate 223 may provide a decorative effect on the exterior of the electronic device 101.

According to an embodiment, the cover member 222 and/or the (2-1)^{th} side wall 221a may cover at least a portion of the display 203. For example, at least a portion of the display 203 (e.g., the second display area A2) may be accommodated inside the second housing 202, and the cover member 222 and/or the (2-1)^{th} side wall 221a may cover a portion of the display 203 accommodated inside the second housing 202.

According to an embodiment, the electronic device 101 may include the display 203. For example, the display 203 may be interpreted as a flexible display or a rollable display. According to an embodiment, at least a portion of the display 203 (e.g., the second display area A2) may slide based on the sliding of the first housing 201. According to an embodiment, the display 203 may be arranged adjacent to or include a touch-sensing circuit, a pressure sensor capable of measuring touch intensity (pressure), and/or a digitizer configured to detect a magnetic field-type stylus pen. The configuration of the display 203 in FIGS. 2 and/or 3 may be wholly or partially the same as that of the display module 160 in FIG. 1.

According to an embodiment, the display 203 may include a first display area A1 and a second display area A2. According to an embodiment, the first display area A1 may always be visible from the exterior. According to an embodiment, the first display area A1 may be interpreted as an area that cannot be located inside the second housing 202. According to an embodiment, the first display area A1 may be seated on a portion of the first housing 201 (e.g., the first plate 211). According to an embodiment, the second display area A2 may extend from the first display area A1 and may be inserted or accommodated inside the second housing 202 or visually exposed outside the second housing 202, depending on the sliding of the first housing 201.

According to an embodiment, the second display area A2 may move under the guidance of a multi-bar structure (e.g., the support member 213 in FIG. 4) mounted substantially within the first housing 201, and may be accommodated inside the second housing 202 or in a space formed between the first housing 201 and the second housing 202, or visually exposed outside. According to an embodiment, the second display **area A2** may move based on the sliding of the first housing 201 in the width direction (e.g., the direction indicated by arrow ①). For example, at least a portion of the second display area A2 may be unrolled or rolled along with the display support member 213 based on the sliding of the first housing 201.

According to an embodiment, when viewed from above the first housing 201, as the first housing 201 moves from the closed state to the opened state, the second display area A2 may gradually be exposed outside the second housing 202 and may form a substantially flat plane together with the first display area A1. In an embodiment, the second display area A2 may be at least partially accommodated inside the first housing 201 and/or the second housing 202.

According to an embodiment, the electronic device 101 may include one or more key input devices 241, connector holes 243, audio modules 247a and 247b, or camera modules 249a and 249b. Although not illustrated, the electronic device 101 may further include an indicator (e.g., an LED device) or various sensor modules. The configurations of the audio modules 247a and 247b and the camera modules 249a and 249b of FIGS. 2 and 3 may be wholly or partially the same as those of the audio module 170 and the camera module 180 of FIG. 1.

According to an embodiment, the key input device 241 may be located in an area of the second housing 202. Depending on the external appearance and use state, the electronic device 101 may be designed such that the illustrated key input devices 241 are omitted or one or more additional key input devices are included. According to an embodiment, the electronic device 101 may include key input devices (not illustrated), such as a home key button or touch pads arranged around the home key button. According to an embodiment (not illustrated), at least some of the key input devices 241 may be disposed on the second housing 202.

According to an embodiment, the key input devices 241 may be used as a driving structure to provide the slide-in and slide-out operation of the display 203 automatically or semi-automatically. For example, when a user pushes an open trigger button (e.g., the key input device 241 of FIG. 2) exposed to the outside of the electronic device 101, the display 203 may automatically slide in or slide out (automatic operation). As another example, when a user pushes the display 203 of the electronic device 101 to slide it out to a predetermined section, the remaining section may be fully slid out by the force of an elastic member (not illustrated) and/or a driving mechanism (not illustrated) mounted within the electronic device 101 (semi-automatic operation). For example, the state of the electronic device 101 may change from the closed state (e.g., FIG. 2) to the opened state (e.g., FIG. 3) through the slide-out operation. The slide-in operation of the electronic device 101 may also be performed to correspond to the slide-out operation.

According to an embodiment, the connector hole 243 may be omitted in some embodiments and may accommodate a connector (e.g., a USB connector) for transmitting/receiving power and/or data to/from an external electronic device. Although not illustrated, the electronic device 101 may include multiple connector holes 243, and some of the connector holes 243 may function as connector holes for transmitting/receiving audio signals to/from an external electronic device. In the illustrated embodiment, the connector hole 243 is disposed in the (2-3)^{th} side wall 221c, but the disclosure is not limited thereto. The connector holes 243 or other connector holes (not illustrated) may be disposed in the (2-1)^{th} side wall 221a or the (2-2)^{th} side wall 221b.

According to an embodiment, the audio modules 247a and 247b may include one or more speaker holes 247a and 247b and/or one or more microphone holes. At least one of the speaker holes 247a and 247b may be provided as an external speaker hole. At least one of the speaker holes 247a and 247b may be provided as a receiver hole for voice calls. The electronic device 101 may include a microphone for acquiring sound, and the microphone may acquire external sounds of the electronic device 101 through the microphone hole. According to an embodiment, the electronic device 101 may include multiple microphones in order to detect the direction of sound. According to an embodiment, the electronic device 101 may include an audio module in which the speaker holes 247a and 247b and the microphone hole are implemented as a single hole, or may include a speaker excluding the speaker hole 247a (e.g., a piezo speaker).

According an embodiment, the camera modules 249a and 249b may include a first camera module 249a and/or a second camera module 249b. The second camera module 249b may be located in the second housing 202 and may capture an image of a subject in a direction opposite to the first display area A1 of the display 203. The electronic device 101 may include multiple camera modules 249a and 249b. For example, the electronic device 101 may include at least one of a wide-angle camera, a telephoto camera, and a close-up camera. In some embodiments, the electronic device 101 may include an infrared projector and/or an infrared receiver to measure the distance to a subject. The camera modules 249a and 249b may include one or more lenses, an image sensor, and/or an image signal processor. The electronic device 101 may further include another camera module (e.g., a front camera) (e.g., the first camera module 249a) that captures an image of a subject in the direction opposite to the second camera module 249b. For example, the first camera module 249a may be disposed around the first display area A1 or in an area overlapping the first display area A1, and when disposed in the area overlapping the display 203, may capture an image of a subject through the display 203.

According to an embodiment, an indicator (e.g., an LED device) of the electronic device 101 may be disposed on the first housing 201 or the second housing 202, and may include a light-emitting diode to provide state information of the electronic device 101 as a visual signal. The sensor module (e.g., the sensor module 176 in FIG. 1) of the electronic device 101 may generate an electrical signal or a data value corresponding to the internal operating state or the extemal environmental state of the electronic device 101. The sensor module may include, for example, a proximity sensor, a fingerprint sensor, or a biometric sensor (e.g., an iris/face recognition sensor or an HRM sensor). In an embodiment, the electronic device 101 may further include at least one of a gesture sensor, a gyro sensor, an atmospheric pressure sensor, a magnetic sensor, an acceleration sensor, a grip sensor, a color sensor, an infrared (IR) sensor, a temperature sensor, a humidity sensor, or an illuminance sensor. The configurations of the display 203, the audio modules 247a and 247b, and the camera modules 249a and 249b of FIGS. 2A and 2B may be wholly or partially the same as those of the display module 160, the audio module 170, and the camera module 180 of FIG. 1.

FIG. 4 is an exploded perspective view of an electronic device 101 according to an embodiment of the disclosure.

Referring to FIG. 4, the electronic device 101 may include a first housing 201, a second housing 202, a display 203, and a display support member 213. A portion of the display 203 (e.g., the second display area A2) may be accommodated inside the electronic device 101 under the guidance of the display support member 213. The configurations of the first housing 201, the second housing 202, and the display 203 of FIG. 4 may be wholly or partly the same as those of the first housing 201, the second housing 202, and the display 203 of FIG. 2 and/or FIG. 3.

According to an embodiment, the first housing 201 may include a first plate 211 and a slide cover 212. The first plate 211 and the slide cover 212 may perform linear reciprocating motion in one direction (e.g., the direction indicated by arrow ① in FIG. 3) under the guidance of the second housing 202. According to an embodiment, the first plate 211 may slide together with the slide cover 212 relative to the second housing 202. For example, at least a portion of the display 203 and/or at least a portion of the display support member 213 may be disposed between the first plate 211 and the slide cover 212.

According to an embodiment, the first plate 211 may support at least a portion of the display 203 (e.g., the second display area A2). For example, the first plate 211 may include a curved surface 250, and at least a portion of the second display area A2 of the display 203 may be located on the curved surface 250. According to an embodiment, the first plate 211 may be interpreted as a display support bar (DSB) and/or a display support plate (DSP).

According to an embodiment, the slide cover 212 may protect the display 203 located on the first plate 211. For example, the slide cover 212 may surround at least a portion of the display 203. At least a portion of the display 203 may be located between the first plate 211 and the slide cover 212. According to an embodiment, the first plate 211 and the slide cover 212 may be made of a metal material and/or a non-metal (e.g., polymer) material.

According to an embodiment, the first housing 201 may include a guide rail 215. According to an embodiment, the guide rail 215 may be connected to the first plate 211 and/or the slide cover 212. For example, the guide rail 215, together with the first plate 211 and the slide cover 212, may slide relative to the second housing 202.

According to an embodiment, the electronic device 101 may include a display support member 213. According to an embodiment, the display support member 213 may support the display 203. For example, the display support member 213 may be connected to the display 203. According to an embodiment, at least a portion of the display 203 and the display support member 213 may be located between the first plate 211 and the slide cover 212. According to an embodiment, as the first housing 201 slides, the display support member 213 may move relative to the second housing 202. In the closed state (e.g., FIG. 2), most of the structure of the display support member 213 may be accommodated inside the second housing 202. According to an embodiment, at least a portion of the display support member 213 may move to correspond to the curved surface 250 located at an edge of the first plate 211.

According to an embodiment, the display support member 213 may include multiple rods (or bars) 214. For example, the display support member 213 may be referred to as a multi-bar structure. The multiple rods 214 may be linearly extended and disposed to be parallel to the rotation axis R of the curved surface 250 and may be arranged in a direction substantially perpendicular to the rotation axis R (e.g., the direction in which the first housing 201 slides).

According to an embodiment, each rod 214 may move together with adjacent other rods 214 while maintaining a parallel state with the adjacent other rods 214. According to an embodiment, as the first housing 201 slides, the multiple rods 214 may be arranged to define a curved shape or may be arranged to define a flat shape. For example, as the first housing 201 slides, a portion of the display support member 213 facing the curved surface 250 may provide a curved surface, and another portion of the display support member 213 that does not face the curved surface 250 may provide a flat surface. According to an embodiment, the second display area A2 of the display 203 may be mounted or supported on the display support member 213, and in the opened state (e.g., FIG. 3), at least a portion of the second display area A2 may be visually exposed outside the second housing 202 together with the first display area A1. In the state in which the second display area A2 is exposed to the outside of the second housing 202, the display support member 213 may support or maintain the second display area A2 in the flat state by providing a substantially flat surface. According to an embodiment, the display support member 213 may be replaced with a bendable integrated support member (not illustrated). According to an embodiment, the display support member 213 may be interpreted as a multi-bar or articulated hinge structure.

According to an embodiment, the guide rail 215 may guide the movement of the multiple rods 214. According to an embodiment, the guide rail 215 may include an upper guide rail adjacent to the (1-2)^{th} side wall (e.g., the (1-2)^{th} side wall 211b in FIG. 3) and a lower guide rail adjacent to the (1-3)^{th} side wall (e.g., the (1-3)^{th} side wall 211c in FIG. 3). According to an embodiment, the guide rail 215 may include a groove-shaped rail 215a provided inside of the guide rail 215 and a protruding portion 215b located inside of the guide rail. At least a portion of the protruding portion 215b may be surrounded by the rail 215a. According to an embodiment, the display support member 213 may be located between the upper guide rail and the lower guide rail and may move while maintaining a fitted engagement with the upper guide rail and the lower guide rail. For example, the top portions and/or bottom portions of the multiple rods 214 may slide along the rail 215a in a fitted state.

According to an embodiment, when the electronic device 101 is opened (e.g., the slide-out operation), the size of the area of the display 203 visually exposed outside may increase. For example, the first plate 211, which receives driving force from a motor structure 260 via a gear structure 270, may perform the slide-out operation, and the protruding portion 215b inside the guide rail 215 may push the top portions and/or bottom portions of the multiple rods 214. Accordingly, the display 203 accommodated between the first plate 211 and the slide cover 212 may be expanded.

According to an embodiment, when the electronic device 101 is closed (e.g., the slide-in operation), the size of the area of the display 203 visually exposed outside may decrease. For example, through the driving of the motor structure 260 (e.g., driving for display slide-in) and/or external force provided by a user, the first plate 211 may perform the slide-in operation, and the outer portion of the guide rail 215 (e.g., the portion other than the protruding portion 215b) may push the top portions and/or bottom portions of the multiple rods 214. Accordingly, the expanded display 203 may be accommodated between the first plate 211 and the slide cover 212.

According to an embodiment, the second housing 202 may include a second plate 221, a cover member 222, and a rear surface plate 223. According to an embodiment, the second plate 221 may support at least a portion of the display 203 (e.g., the first display area A1). The second plate 221 may be disposed between the display 203 and the circuit board 204. According to an embodiment, the second plate 221 may be referred to as a front structure that accommodates at least a portion of the components of the electronic device 101. According to an embodiment, the cover member 222 may accommodate components of the electronic device 101 (e.g., a battery 289 (e.g., the battery 189 in FIG. 1) and the circuit board 204) and may protect the components of the electronic device 101. According to an embodiment, the cover member 222 may be referred to as a book cover.

According to an embodiment, multiple boards may be accommodated in the second housing 202. A processor, memory, and/or an interface may be mounted on the circuit board 204, which is the main board. The processor may include, for example, one or more of a central processing unit, an application processor, a graphics processing unit, an image signal processor, a sensor hub processor, or a communication processor. According to an embodiment, the circuit board 204 may include a flexible printed circuit board-type radio frequency cable (FRC). For example, the circuit board 204 may be disposed within the cover member 222, and may be electrically connected to an antenna module (e.g., the antenna module 197 in FIG. 1) and a communication module (e.g., the communication module 190 in FIG. 1).

According to an embodiment, the memory may include, for example, volatile memory or nonvolatile memory.

According to an embodiment, the interface may include, for example, a high-definition multimedia interface (HDMI), a universal serial bus (USB) interface, an SD card interface, and/or an audio interface. For example, the interface may electrically or physically connect the electronic device 101 to an external electronic device, and include a USB connector, an SD card/MMC connector, or an audio connector.

According to an embodiment, the electronic device 101 may further include a separate sub-circuit board 290 spaced apart from the circuit board 204 within the second housing 202. The sub-circuit board 290 may be electrically connected to the circuit board 240 via a flexible board 291. The sub-circuit board 290 may be electrically connected to the battery 289 or electrical components disposed in an end portion of the electronic device 101, such as a speaker and/or a SIM socket, to transmit signals and power.

According to an embodiment, the battery 289 is a device that supplies power to at least one component of the electronic device 101, and may include, for example, a non-rechargeable primary battery, a rechargeable secondary battery, or a fuel cell. At least a portion of the battery 289 may be disposed on substantially the same plane as, for example, the circuit board 204. The battery 289 may be integrally disposed inside the electronic device 101 or may be detachably disposed on the electronic device 101.

According to an embodiment, the battery 289 may be configured as a single integrated battery or may include multiple detachable batteries (e.g., a first battery 289a and a second battery 289b). According to an embodiment, when an integrated battery is located on the first plate 211, the integrated battery may move simultaneously with the sliding of the first plate 211. According to an embodiment, when an integrated battery is located on the second plate 221, the integrated battery may be fixedly disposed on the second plate 221 regardless of the sliding of the first plate 211. As another example, when, of the detachable batteries, a first battery 289a is located on the first plate 211 and a second battery 289b is fixedly located on the second plate 221, only the first battery 289a may move simultaneously with the sliding of the first plate 211.

According to an embodiment, the rear surface plate 223 may substantially define at least a portion of the exterior of the second housing 202 or the electronic device 101. For example, the rear surface plate 223 may be coupled to the outer surface of the cover member 222. According to an embodiment, the rear surface plate 223 may be integrated with the cover member 222. According to an embodiment, the rear surface plate 223 may provide a decorative effect on the exterior of the electronic device 101. The second support member 221 and the cover member 222 may be manufactured using at least one of a metal or a polymer, and the rear surface plate 223 may be manufactured using at least one of a metal, glass, a synthetic resin, or ceramic. According to an embodiment, the second plate 221, the cover member 222, and/or the rear surface plate 223 may be made of a material that at least partially transmits light (e.g., in an auxiliary display area). For example, in the state in which a portion of the display 203 (e.g., the second display area A2) is accommodated inside the electronic device 101, the electronic device 101 may output visual information by using the second display area A2. The auxiliary display area may be a portion of the second plate 221, the cover member 222, and/or the rear surface plate 223, where the display 203 accommodated inside the second housing 202 is located.

The electronic device 101 illustrated in FIGS. 2 to 4 has a rollable or slidable exterior, but the disclosure is not limited thereto. According to an embodiment (not illustrated), at least a portion of the illustrated electronic device may be rolled into a scroll shape.

Referring to FIGS. 2 to 4, when viewed from the front of the electronic device 101, the display 203 may extend in the rightward direction of the electronic device 101. However, the structure of the electronic device 101 is not limited to this configuration. For example, according to an embodiment, the display 203 may extend in the leftward direction of the electronic device 101. According to an embodiment, the display 203 may extend in the length direction of the electronic device 101.

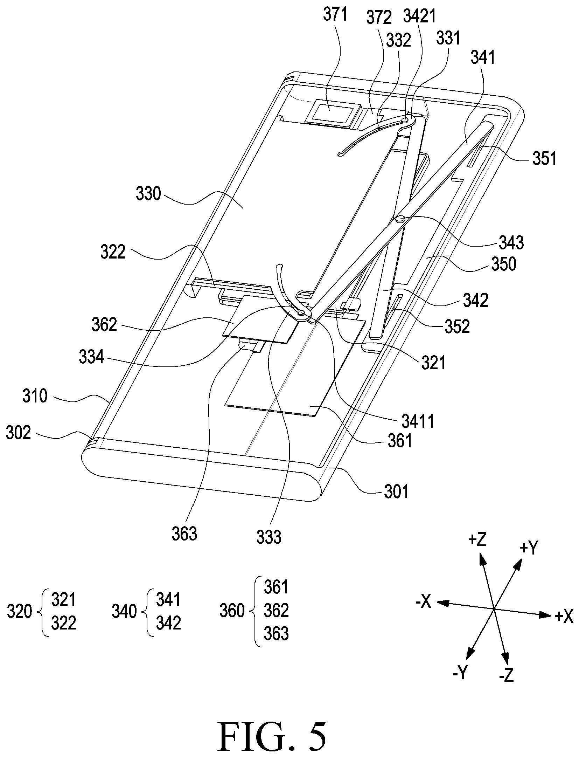

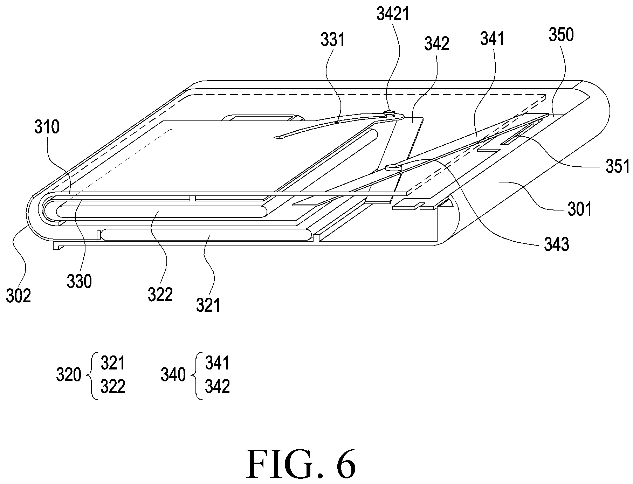

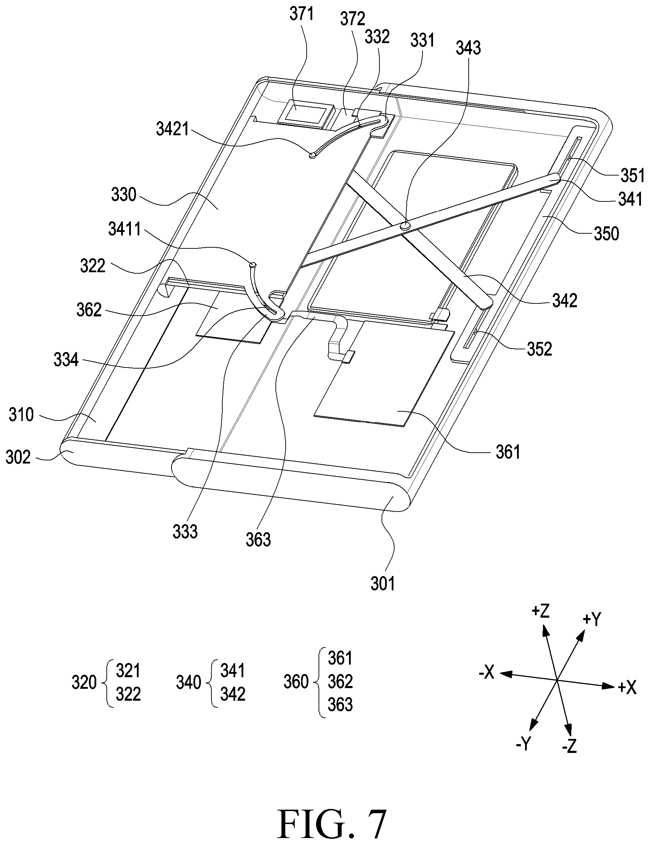

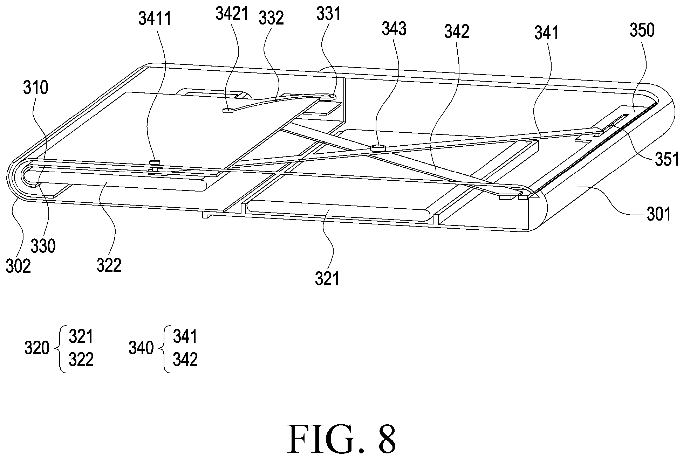

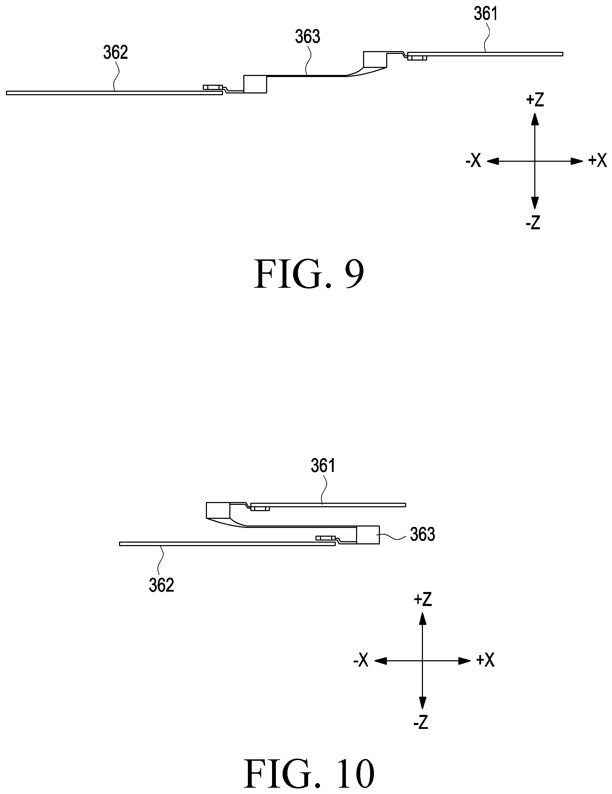

FIG. 5 is a perspective view illustrating internal components of an electronic device 101 according to an embodiment of the disclosure in the closed state. FIG. 6 is a cross-sectional view illustrating internal components of the electronic device 101 according to an embodiment of the disclosure in the closed state. FIG. 7 is a perspective view illustrating intemal components of the electronic device 101 according to an embodiment of the disclosure in the opened state. FIG. 8 is a cross-sectional view illustrating internal components of the electronic device 101 according to an embodiment of the disclosure in the opened state. FIG. 9 is a side view illustrating printed circuit boards 360 according to an embodiment of the disclosure in the opened state. FIG. 10 is a side view illustrating printed circuit boards 360 according to an embodiment of the disclosure in the closed state.

Referring to FIGS. 5 to 10, the electronic device 101 may include a first housing 301, a second housing 302, a display 310, a battery 320, a plate 330, and a support member 340. The configurations of the first housing 301, the second housing 302, the display 310, and the battery 320 in FIGS. 5 to 10 may be wholly or partially the same as those of the second housing 202, the first housing 201, the display 203, and the battery 289 in FIG. 4. The structure of FIGS. 5 to 10 may optionally be combined with the structure of FIGS. 2 to 4.

According to FIGS. 5 to 10, a spatial coordinate system defined by the X-axis, the Y-axis, and the Z-axis, which are orthogonal to one another, is illustrated. Here, the X axis may represent the width direction of the electronic device 101, the Y axis may represent the length direction of the electronic device 101, and the Z axis may represent the thickness direction of the electronic device 101.

According to an embodiment, the electronic device 101 may include a housing. The housing may include a first housing 301 and a second housing 302, which is movable relative to the first housing 301. In an embodiment, the electronic device 101 may be interpreted as having a structure in which the first housing 301 is disposed to be slidable relative to the first housing 302. According to an embodiment, the first housing 301 may be referred to as, for example, a second structure, a main unit, or a main housing. The first housing 301 may accommodate at least a portion of the second housing 302 and may guide the sliding of the second housing 302.

According to an embodiment, the first housing 301 may be configured in a shape with one side (e.g., the front surface) open to accommodate (or surround) at least a portion of the second housing 302. According to an embodiment, the first housing 301 may accommodate various electrical and electronic components, such as a first battery 321, a first printed circuit board 361, a motor, a speaker, and a SIM socket. According to an embodiment, the second housing 302 may accommodate various electrical and electronic components, such as a second battery 322, a second printed circuit board 362, and various electric and electronic components.

According to an embodiment, the total mass and/or weight of the components accommodated in the first housing 301 and the second housing 302 may be balanced between the two housings. The total mass and/or weight of the components accommodated in the first housing 301 and the second housing 302 may not differ significantly between the two housings. The total mass and/or weight of the components accommodated in the first housing 301 and the second housing 302 may be substantially similar.

According to an embodiment, the display 310 may include a first display area A1 disposed on the first housing 301 and a second display area A2 extending from the first display area A1. At least a portion of the second display area A2 may be configured to slide based on the sliding of the second housing 302.

According to an embodiment, the battery 320 may supply power to at least one component of the electronic device 101. According to an embodiment, the battery 320 may include, for example, a non-rechargeable primary cell, a rechargeable secondary cell, or a fuel cell. According to an embodiment, multiple battery 320 may be accommodated in the electronic device 101. According to an embodiment, the batteries 320 may be separately disposed in the first housing 301 and the second housing 302, respectively. The batteries 320 may include a first battery 321 disposed in the first housing 301 and a second battery 322 disposed in the second housing 302. However, the number of batteries accommodated in the electronic device 101 is not limited to the above embodiment and may be modified in various designs. According to an embodiment, multiple batteries may be disposed in the first housing 301. According to an embodiment, multiple batteries may be disposed in the second housing 302.

According to an embodiment, the first battery 321 may be accommodated inside the first housing 301. According to an embodiment, the second battery 322 may be accommodated inside the second housing 302. The second battery 322 may be disposed at the bottom of the display 310. In the closed state, the second battery 322 may be disposed between the first display area A1, which is visually exposed outside the electronic device 101, and the second display area A2, which extends from the first display area A1 and is accommodated inside the second housing 302. The second battery 322 may be disposed at the bottom of the plate 330. According to an embodiment, the second battery 322 may slide simultaneously with the sliding of the second housing 302.

According to an embodiment, the first battery 321 and the second battery 322 may have different Z-axis positions within their respective housings. In the closed state of the electronic device 101, the second battery 322 may be located above the first battery 321. For example, the rear surface of the second battery 322 may be positioned higher than the front surface of the first battery 321 in terms of the Z-axis.

According to an embodiment, as the battery 320 is separately disposed in the first housing 301 and the second housing 302, the weight balance between the first housing 301 and the second housing 302 may be maintained when the first housing 301 moves relative to the second housing 302 (e.g., sliding).

According to an embodiment, multiple circuit boards may be accommodated in the electronic device 101. According to an embodiment, the printed circuit boards 360 may be separately disposed in the first housing 301 and the second housing 302, respectively. The electronic device 101 may include a first printed circuit board 361 disposed in the first housing 301, a second printed circuit board 362 disposed in the second housing 302, and a flexible printed circuit board 363 electrically connecting the first printed circuit board 361 and the second printed circuit board 362.

According to an embodiment, the first printed circuit board 361 may be the main circuit board disposed in the first housing 301. A processor, memory, and/or an interface may be mounted on the first printed circuit board 361. The first printed circuit board 361 may include a flexible printed circuit board type radio frequency cable (FRC). For example, the first printed circuit board 361 may be electrically connected to an antenna module (e.g., the antenna module 197 in FIG. 1) and a communication module (e.g., the communication module 190 in FIG. 1) mounted within the first housing 301. Electrical components such as an application processor (AP) and a communication processor (CP) may be mounted on the first printed circuit board 361.

According to an embodiment, the second printed circuit board 362 may be a sub-circuit board electrically connected to the main circuit board. The second printed circuit board 362 may be configured to slide based on the sliding of the second housing 302. The second printed circuit board 362 may move simultaneously with the sliding of the second housing 302.

According to an embodiment, the first printed circuit board 361 and the second printed circuit board 362 may have different Z-axis positions within their respective housings. In the closed state of the electronic device 101, the second printed circuit board 362 may be positioned above the first printed circuit board 361. For example, the rear surface of the second printed circuit board 362 may be positioned higher than the front surface of the first printed circuit board 361 in terms of the Z-axis. However, the functions and/or connection components of the first printed circuit board 361 and the second printed circuit board 362 are not limited to the above embodiments and may be modified in various designs.

According to an embodiment, the flexible printed circuit board 363 may be positioned and shaped differently in response to the sliding of the second housing 302 relative to the first housing 301.

According to an embodiment, as the printed circuit board 360 is separately disposed in the first housing 301 and the second housing 302, the weight balance between the first housing 301 and the second housing 302 may be maintained when the first housing 301 moves relative to the second housing 302 (e.g., sliding).

According to an embodiment, the plate 330 may be disposed in the second housing 302. The plate 330 may be disposed at the bottom of the display 310. According to an embodiment, the second battery 322 may be seated at the bottom of the plate 330. The plate 330 may be disposed between the display 310 and the second battery 322. The plate 330 may be coupled to the support member 340 and configured to support the movement of the support member 340. According to an embodiment, the plate 330 may provide a seating space for the second battery 322. According to an embodiment, the plate 330 may be configured to slide based on the sliding of the second housing 302.

According to an embodiment, the plate 330 may include a flat surface and a curved surface extending from the flat surface to correspond to the curved surface of the second housing 302 (e.g., the curved surface 250 in FIG. 4). The plate 330 may include a first protruding area 331 protruding upward (in the +Y-axis direction) on the flat surface and a second protruding area 333 protruding downward (in the -Y-axis direction). In the first protruding area 331, a first slit 332 may form a hole corresponding to the rotation radius of the second support member 342. In the second protruding area 333, a second slit 334 may form a hole corresponding to the rotation radius of the second support member 341. According to an embodiment, the first slit 332 and the second slit 334 may be configured in a curved shape.

However, the first protruding area 331 and the second protruding area 333 may be omitted depending on a design method.

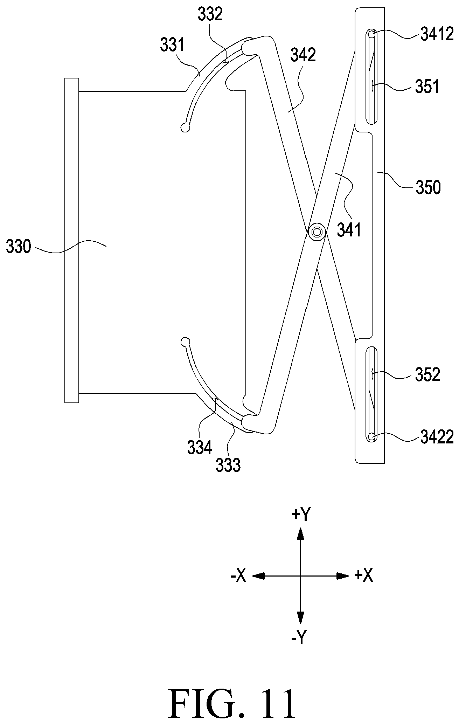

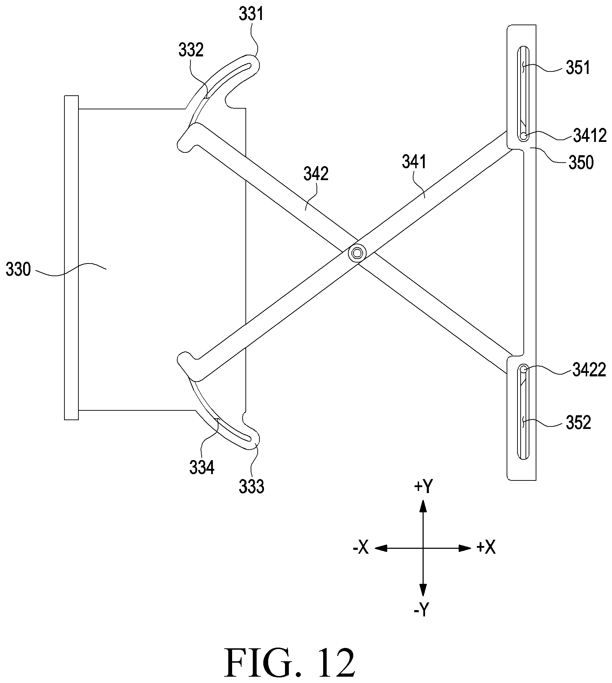

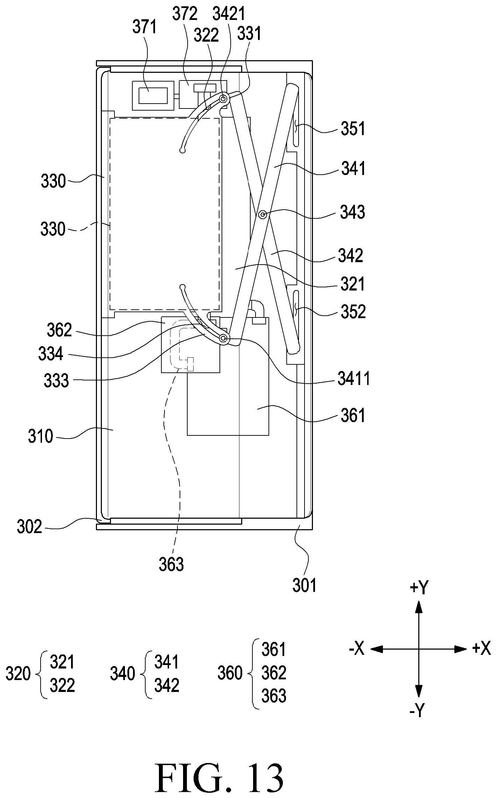

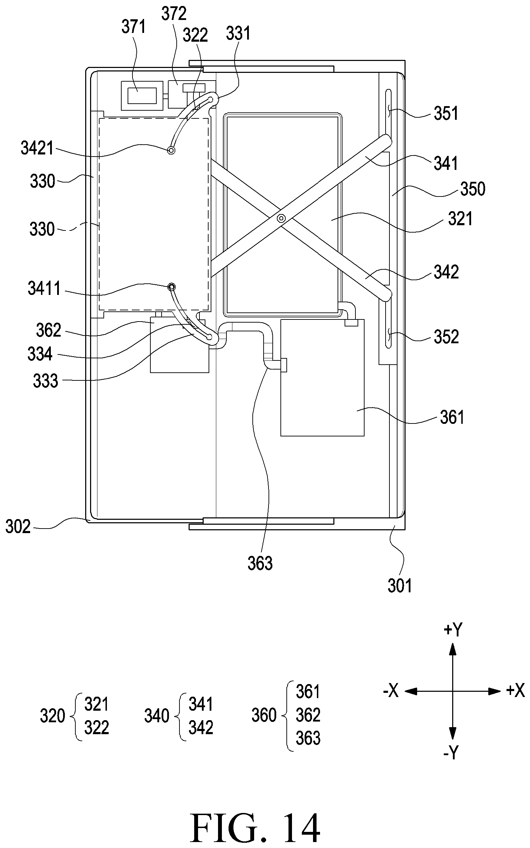

FIG. 11 is a front view illustrating support members 340 to an embodiment of the disclosure in the closed state. FIG. 12 is a front view illustrating the support members 340 according to an embodiment of the disclosure in the opened state. FIG. 13 is a front view illustrating internal components of the electronic device 101 according to an embodiment of the disclosure in the closed state. FIG. 14 is a front view illustrating intemal components of the electronic device 101 according to an embodiment of the disclosure in the opened state.

Referring to FIGS. 11 to 14, the electronic device 101 may include a first housing 301, a second housing 302, a display 310, a battery 320, a plate 330, and a support member 340. The configurations of the first housing 301, the second housing 302, the display 310, and the battery 320 in FIGS. 11 to 14 may be wholly or partially the same as those of the second housing 202, the first housing 201, the display 203, and the battery 289 in FIGS. 5 to 10. The structure of FIGS. 11 to 14 may optionally be combined with the structure of FIGS. 5 to 10.

According to FIGS. 11 to 14, a spatial coordinate system defined by the X-axis, the Y-axis, and the Z-axis, which are orthogonal to one another, is illustrated. Here, the X axis may represent the width direction of the electronic device 101, the Y axis may represent the length direction of the electronic device 101, and the Z axis may represent the thickness direction of the electronic device 101.

According to an embodiment, the support members 340 may support the sliding of the electronic device 101. The support members 340 may support the sliding of the second housing 302 relative to the first housing 301. According to an embodiment, the support members 340 may each be configured such that one end is connected to the first housing 301 and the other end is connected to the plate 330. The support members 340 may be configured to move based on the sliding of the second housing 302. For example, the support members 340 may be configured to perform rotational motion based on the sliding of the second housing 302.

According to an embodiment, the support members 340 may include a first support member 341 configured to rotate in a first direction (e.g., clockwise) based on the sliding of the second housing 302, and a second support member 342, which shares the central axis 343 with the first support member 341 and is configured to rotate in a second direction (e.g., counterclockwise) opposite to the first direction based on the sliding of the second housing 302.

According to an embodiment, the first support member 341 and the second support member 342 of the support members 340 may have a bar shape. The first support member 341 and the second support member 342 may share the central axis 343. The first support member 341 and the second support member 342 may be arranged in an "X" shape and may overlap each other at the central axis 343. The first support member 341 and the second support member 342 may be symmetrically arranged about the central axis 343. The first support member 341 and the second support member 342 may be symmetrically moved about the central axis 343. The first support member 341 and the second support member 342 may be symmetrically arranged and perform rotational motion about the X-axis. However, the shape and structure of the support members 340 are not limited to the above embodiment and may be variously modified in design as long as the structure supports the sliding of the second housing 302 relative to the first housing 301.

According to an embodiment, each of the support members 340 may include protrusions 3411 and 3412 or 3421 and 3422 extending in the vertical direction (the Z-axis direction) at its end portions. The protrusions may be divided into a first portion with a smaller diameter and a second portion with a relatively larger diameter located at the end portions. For example, the first portion may have a smaller diameter than the slit. For example, the second portion may have a larger diameter than the slit. However, the shape and structure of the protrusions are not limited to the above embodiment and may be variously modified.

According to an embodiment, one end of the first support member 341 connected to the first housing 301 may include a first protrusion 3412 extending in the Z-axis direction, and the other end of the first support member 341 connected to the plate 330 may include a second protrusion 3411 extending in the Z-axis direction. For example, one end of the first support member 341 connected to the first housing 301 may include a first protrusion 3412 extending in the -Z-axis direction, and the other end of the first support member 341 connected to the plate 330 may include a second protrusion 3411 extending in the +Z-axis direction. For example, one end of the first support member 341 connected to the first housing 301 may include a first protrusion 3412 extending in the +Z-axis direction, and the other end of the first support member 341 connected to the plate 330 may include a second protrusion 3411 extending in the -Z-axis direction.

According to an embodiment, one end of the second support member 342 connected to the first housing 301 may include third first protrusion 3422 extending in the Z-axis direction, and the other end of the second support member 342 connected to the plate 330 may include a fourth protrusion 3421 extending in the Z-axis direction. For example, one end of the second support member 342 connected to the first housing 301 may include a third protrusion 3422 extending in the -Z-axis direction, and the other end of the second support member 342 connected to the plate 330 may include a fourth protrusion 3421 extending in the +Z-axis direction. For example, one end of the second support member 342 connected to the first housing 301 may include a third protrusion 3422 extending in the +Z-axis direction, and the other end of the second support member 342 connected to the plate 330 may include a fourth protrusion 3421 extending in the -Z-axis direction.

According to an embodiment, one end of each support member 340 may be connected to a bracket 350 provided in the first housing 301. According to an embodiment, the bracket 350 of the first housing 301 may extend inward from the side surface of the first housing 301. For example, the bracket 350 may extend a predetermined length in the leftward direction (-X direction) from the right surface of the first housing 301. The bracket 350 may extend in the length direction (the Y-axis direction) along the side surface of the first housing 301. According to an embodiment, the bracket 350 may be integrated with the first housing 301. According to an embodiment, the first housing 301 and the bracket 350 may be separate components configured to be assembled together.

According to an embodiment, the bracket 350 may include a third slit 351 provided to engage with the first support member 341 and a fourth slit 352 provided to engage with the second support member 342. For example, the third slit 351 may be provided in the upward direction (the +Y-axis direction), and the fourth slit 352 may be provided in the downward direction (the -Y-axis direction). The first protrusion 3412 of the first support member 341 may pass through the third slit 351 such that its Z-axis position is fixed. The third protrusion 3422 of the second support member 342 may pass through the fourth slit 352 such that its Z-axis position is fixed.

According to an embodiment, the length of the third slit 351 may correspond to the rotational motion of the first support member 341 based on the sliding of the second housing 302.

According to an embodiment, when the first support member 341 moves in the first direction (e.g., clockwise) based on the sliding of the second housing 302 to correspond to the opened state of the electronic device 101, the first protrusion 3412 of the first support member 341 may be positioned at the lower (-Y) end of the third slit 351. Conversely, in the closed state in which the first support member 341 moves in the second direction (e.g., counterclockwise), the first protrusion 3412 of the first support member 341 may be positioned at the upper (+Y) end of the third slit 351.

According to an embodiment, the length of the fourth slit 352 may correspond to the rotational motion of the second support member 342 based on the sliding of the second housing 302.

According to an embodiment, when the second support member 342 moves in the second direction (e.g., counterclockwise) based on the sliding of the second housing 302 to correspond to the opened state, the third protrusion 3422 of the second support member 342 may be positioned at the upper (+Y) end of the fourth slit 352. Conversely, in the closed state in which the second support member 342 moves in the first direction (e.g., clockwise), the third protrusion 3422 of the second support member 342 may be positioned at the lower (-Y) end of the fourth slit 352.

According to an embodiment, the other ends of the supports member 340 may be connected to the slits 332 and 334 formed in the plate 330, respectively. The second protrusion 3411 of the first support member 341 may pass through the second slit 334 such that its Z-axis position is fixed. The fourth protrusion 3421 of the second support member 342 may pass through the first slit 332 such that its Z-axis position is fixed.

According to an embodiment, when the first support member 341 moves in the first direction (e.g., clockwise) based on the sliding of the second housing 302 to correspond to the opened state, the second protrusion 3411 of the first support member 341 may be positioned at the upper (+Y) end of the second slit 334. Conversely, in the closed state in which the first support member 341 moves in the second direction (e.g., counterclockwise), the second protrusion 3411 of the first support member 341 may be positioned at the lower (-Y) end of the second slit 334. The length of the second slit 334 may correspond to the rotational motion of the first support member 341 based on the sliding of the second housing 302.

According to an embodiment, when the second support member 342 moves in the second direction (e.g., counterclockwise) based on the sliding of the second housing 302 to correspond to the opened state, the fourth protrusion 3421 of the second support member 342 may be positioned at the lower (-Y) end of the first slit 332. Conversely, in the closed state in which the second support member 342 moves in the first direction (e.g., clockwise), the fourth protrusion 3421 of the second support member 342 may be positioned at the upper (+Y) end of the first slit 332. The length of the first slit 332 may correspond to the rotational motion of the second support member 342 based on the sliding of the second housing 302.

However, the shape and/or structure of the support members 340 is not limited to the above embodiments and may be variously modified depending on the arrangement and design of surrounding structures.

A flexible electronic device may include multiple housings, and when the display is in an extended to correspond to the opened state, the interiors of the housings supporting the expanded display may be provided as empty spaces, leading to an imbalance in weight, which may cause the weight to be concentrated on one side or cause discomfort when touching the expanded display.

The disclosure relates to a flexible electronic device that includes batteries (e.g., the battery 320 in FIG. 5) and/or components disposed in multiple housings, respectively, and support members (e.g., the support members 340 in FIG. 5) configured to support these components, thereby supporting the sliding of the housings while preventing the weight from being concentrated on a single housing.

It may be apparent to those ordinarily skilled in the art to which the disclosure belongs that the above-described rollable electronic device is not limited by the above-described embodiments and drawings, and can be variously substituted, modified, and changed within the technical scope of the disclosure.

According to an embodiment of the disclosure, an electronic device may include a first housing (301 in FIG. 5), a second housing (302 in FIG. 5) configured to slide relative to the first housing, a display (310 in FIG. 5) including a first display area disposed on the first housing and a second display area extending from the first display area, the display being configured such that at least a portion of the second display area is slid based on sliding of the second housing, a first battery (321 in FIG. 5) disposed in the first housing, a second battery (322 in FIG. 5) disposed in the second housing and configured to slide based on the sliding of the second housing, a plate (330 in FIG. 5) disposed in the second housing and configured to provide a seating space for the second battery based on the sliding of the second housing, and a support member (340 in FIG. 5) having one end connected to the first housing and the other end connected to the plate, the support member being configured to move based on the sliding of the second housing.

Since the batteries 320 are separately disposed in the first housing 301 and the second housing 302, the weight balance of the first housing 301 and the second housing 302 may be maintained when the first housing 301 moves (e.g., slides) relative to the second housing 302.

According to an embodiment, the second battery may be configured to be disposed between the first display area and the second display area when the electronic device is in a closed state.

According to an embodiment, the second battery may be configured to be positioned above the first battery when the electronic device is in the closed state.

According to an embodiment, the electronic device may further include a first printed circuit board (361 in FIG. 5) disposed in the first housing, and a second printed circuit board (362 in FIG. 5) disposed in the second housing and configured to slide based on the sliding of the second housing.

According to an embodiment, the electronic device may further include a flexible printed circuit board (363 in FIG. 5) electrically connecting the first printed circuit board and the second printed circuit board.

According to an embodiment, the plate may be disposed below the display and configured to slide based on the sliding of the second housing.

According to an embodiment, the second battery may be disposed below at least a portion of the plate.

According to an embodiment, the plate may include a flat surface and a curved surface extending from the flat surface to correspond to a curved surface of the second housing.

According to an embodiment, the support member may include a first support member (341 in FIG. 5) configured to rotate in a first direction based on the sliding of the second housing, and a second support member (342 in FIG. 5) sharing a central axis (343 in FIG. 5) with the first support member. The second support member is configured to rotate in a second direction opposite to the first direction based on the sliding of the second housing.

According to an embodiment, the plate may include a first slit (332 in FIG. 5) connected to the first support member and a second slit (334 in FIG. 5) connected to the second support member.

According to an embodiment, the first slit may be provided in a first protruding area (331 in FIG. 5) protruding upward from the plate, and the second slit may be provided in a second protruding area (332 of FIG. 5) protruding downward from the plate.

According to an embodiment, the first housing may include a third slit (351 in FIG. 5) provided to engage with the first support member, and a fourth slit (352 in FIG. 5) provided to engage with the second support member.

According to an embodiment, the support member may further include a protrusion (3411 or 3421 in FIG. 5) extending in a direction perpendicular to a surface of the support member from an end of the support member.

According to an embodiment, the first support member may include a first protrusion positioned at one end connected to the first housing, and a second protrusion (3411 in FIG. 5) positioned at the other end connected to the plate. The first protrusion may engage with the third slit of the first housing, and the second protrusion may engage with the first slit of the plate.

According to an embodiment, the second support member may include a third protrusion positioned at one end connected to the first housing, and a fourth protrusion (3421 of FIG. 5) positioned at the other end connected to the plate, The third protrusion may engage with the fourth slit of the first housing, and the fourth protrusion may engage with the second slit of the plate.

According to an embodiment of the disclosure, An electronic device may include a first housing, a second housing configured to slide relative to the first housing, a display including a first display area disposed on the first housing and a second display area extending from the first display area, the display being configured such that at least a portion of the second display area is slid based on sliding of the second housing, a first component disposed in the first housing, a second component disposed in the second housing and configured to slide based on the sliding of the second housing, a plate disposed in the second housing and configured to provide a seating space for the second component based on the sliding of the second housing, and a support member having one end connected to the first housing and the other end connected to the plate, the support member being configured to move based on the sliding of the second housing.

According to an embodiment, the second component may be configured to be disposed between the first display area and the second display area when the electronic device is in a closed state.

According to an embodiment, the second component may be configured to be positioned above the first battery when the electronic device is in the closed state.

According to an embodiment, the electronic device may further include a first printed circuit board disposed in the second housing, and a second printed circuit board disposed in the second housing and configured to slide based on the sliding of the second housing.

According to an embodiment, the electronic device may further include a flexible printed circuit board electrically connecting the first printed circuit board and the second printed circuit board.

## Claims

1. An electronic device comprising:
a first housing (301 in FIG. 5);
a second housing (302 in FIG. 5) configured to slide relative to the first housing;
a display (310 in FIG. 5) comprising a first display area disposed on the first housing and a second display area extending from the first display area, wherein the display is configured such that at least a portion of the second display area is slid based on sliding of the second housing;
a first battery (321 in FIG. 5) disposed in the first housing;
a second battery (322 in FIG. 5) disposed in the second housing and configured to slide based on the sliding of the second housing;
a plate (330 in FIG. 5) disposed in the second housing and configured to provide a seating space for the second battery based on the sliding of the second housing; and
a support member (340 in FIG. 5) having one end connected to the first housing and another end connected to the plate, wherein the support member is configured to move based on the sliding of the second housing.

2. The electronic device of claim 1, wherein the second battery is configured to be disposed between the first display area and the second display area when the electronic device is in a closed state.

3. The electronic device of any one of claims 1 to 2, wherein the second battery is configured to be positioned above the first battery when the electronic device is in a closed state.

4. The electronic device of any one of claims 1 to 3, wherein the plate is disposed below the display and configured to slide based on the sliding of the second housing.

5. The electronic device of any one of claims 1 to 4, wherein the second battery is disposed below at least a portion of the plate.

6. The electronic device of any one of claims 1 to 5, wherein the plate comprises a flat surface and a curved surface extending from the flat surface to correspond to a curved surface of the second housing.

7. The electronic device of any one of claims 1 to 6, wherein the support member comprises:
a first support member (341 in FIG. 5) configured to rotate in a first direction based on the sliding of the second housing; and
a second support member (342 in FIG. 5) sharing a central axis (343 in FIG. 5) with the first support member, wherein the second support member is configured to rotate in a second direction opposite to the first direction based on the sliding of the second housing.

8. The electronic device of claim 7, wherein the plate comprises a first slit (332 in FIG. 5) connected to the first support member and a second slit (334 in FIG. 5) connected to the second support member.

9. The electronic device of claim 8, wherein the first slit is provided in a first protruding area (331 in FIG. 5) protruding from the plate, and
wherein the second slit is provided in a second protruding area (332 of FIG. 5) protruding downward the plate.

10. The electronic device of claim 8, wherein the first housing comprises:
a third slit (351 in FIG. 5) provided to engage with the first support member; and
a fourth slit (352 in FIG. 5) provided to engage with the second support member.

11. The electronic device of any one of claims 1 to 10, wherein the support member further comprises a protrusion (3411, 3421 in FIG. 5) extending in a direction perpendicular to a surface of the support member from an end of the support member.

12. The electronic device of claim 10, wherein the first support member comprises a first protrusion positioned at one end connected to the first housing, and a second protrusion (3411 of FIG. 5) positioned at another end connected to the plate,
wherein the first protrusion engages with the third slit of the first housing, and
wherein the second protrusion engages with the first slit of the plate.

13. The electronic device of claim 10, wherein the second support member comprises a third protrusion positioned at one end connected to the first housing, and a fourth protrusion (3421 of FIG. 5) positioned at another end connected to the plate,
wherein the third protrusion engages with the fourth slit of the first housing, and
wherein the fourth protrusion engages with the second slit of the plate.

14. An electronic device comprising:
a first housing;
a second housing configured to slide relative to the first housing;
a display comprising a first display area disposed on the first housing and a second display area extending from the first display area, wherein the display is configured such that at least a portion of the second display area is slid based on sliding of the second housing;
a first component disposed in the first housing;
a second component disposed in the second housing and configured to slide based on the sliding of the second housing;
a plate disposed in the second housing and configured to provide a seating space for the second component based on the sliding of the second housing; and
a support member having one end connected to the first housing and another end connected to the plate, wherein the support member is configured to move based on the sliding of the second housing.

15. The electronic device of claim 14, wherein the second component is configured to be disposed between the first display area and the second display area when the electronic device is in a closed state.
